# EUROPEAN PATENT APPLICATION

(11) **EP 2 173 116 A1**
(43) Date of publication of application: **07.04.2010**
(21) Application number: 08757600.5
(22) Date of filing: 04.06.2008
(51) Int. Cl.: H04W 4/00, H04M 3/42

(54) **A CALL PROCESSING METHOD AND AN INTELLIGENT NETWORK SERVICE CONTROL DEVICE FOR REALIZING ONE NUMBER MULTIPLE TERMINALS SERVICE**

(30) Priority: 24.07.2007 CN 200710136340
(71) Applicant: Huawei Technologies Co., Ltd., Longgang District, Shenzhen Guangdong 518129 (CN)
(72) Inventor: HU, Haihua, Shenzhen, Guangdong 518129 (CN); XIE, Xiaohong, Shenzhen, Guangdong 518129 (CN); YE, Zhenghui, Shenzhen, Guangdong 518129 (CN)
(74) Representative: Epping - Hermann - Fischer
(86) International application number: PCT/CN2008/071189
(87) International publication number: WO 2009/012674

(57) **Abstract**

A call processing method for implementing "one number multiple terminals" service is disclosed. A service control point (SCP) in a first network exercises control to route a call that is triggered to a "one number multiple terminals" user in a local network to a second network; and an SCP in a second network controls the call connection to multiple called terminals. An intelligent network service control device is also provided. The call control function that the SCP in the first network generally has is used to route the call out of the network, which does not conflict with the existing service features. In addition, the core component of the first network only needs to undergo a simple routing configuration according to the related control instruction, which does not affect other calls and requires only few network changes.

## Description

### Field of the Invention

The present invention relates to a communication technology, and in particular, to a call processing method and intelligent network service control device for implementing "one number multiple terminals" service.

### Background of the Invention

With the continuous development of communication technologies, diversified communication networks coexist. For example, a global system for mobile communications (GSM) network coexists with a code division multiple access (CDMA) network.

With further research on a next generation network (NGN), a new-generation Internet Protocol (IP) based NGN that integrates a circuit switched (CS) network such as a public switched telephone network (PSTN) and a public land mobile network (PLMN) and an IP packet switched (PS) network is now put into commercial use and becomes popular. The NGN uses a softswitch that has the PS control capability as the core switching device, and is connected to traditional CS networks through a universal media gateway (UMG) that includes a signaling gateway and a trunk gateway. The NGN controls calls via the Session Initiation Protocol (SIP), and supports various services by using an IP/Multiple-Protocol Label Switching (MPLS) bearer network that has the quality of service (QoS) control capability. The NGN will coexist with the prevalent GSM network within a certain period of time.

There are various intelligent service users in the GSM network. When these intelligent service users act as called parties, the calling process in the GSM network is as follows: A mobile switching center (MSC) searches a home location register (HLR) for termination-customized applications for mobile network enhanced logic (CAMEL) subscription information (T-CSI); after obtaining the T-CSI, the MSC triggers the call to an intelligent service control point (SCP); the SCP controls the MSC to connect the call to a called terminal after authenticating the T-CSI.

To utilize different network environments, a same user may have communication terminals in different networks. In this case, the user hopes that multiple terminals use a same number externally. The following describes this case by using a unified communication (UC) service as an example. The UC service is an NGN-based comprehensive intelligent service, and uniquely integrates CS-based traditional communication terminals (for example, GSM) and NGN-based communication terminals (for example, a soft terminal installed in a personal computer). The UC service provides a UC number externally and implements the "one number two terminals" function for CS-based communication terminals and NGN-based communication terminals. In general practice, the UC number is the number of a traditional communication terminal, for example, a GSM intelligent service mobile phone number.

When a UC user, whose UC number is a GSM intelligent service mobile phone number, and who has a GSM intelligent service terminal and an NGN terminal is called, the following two call processing methods are adopted to implement the "one number two terminals" function:

### 1. Adding subscription attributes to the HLR

According to this method, a "one number two terminals" service subscription attribute is added to the HLR for the GSM mobile phone number. Supposing the subscribed intelligent service attribute is T_CSIO, a new "one number two terminals" service subscription attribute "T_CSI1" is added.

When the GSM mobile phone number is called, the MSC triggered by the call searches the HLR, obtains the service T_CSI0 registered for the mobile phone number, and triggers an intelligent service in the GSM network; the SCP controls the MSC to connect the call to the GSM mobile terminal according to the preceding intelligent service process; the MSC continues searching the HLR, and triggers the call to a gateway mobile switching center (GMSC) that interconnects the home network of the called party and the NGN according to the T_CSI1 attribute; the GMSC coordinates in routing the call to the NGN; the NGN connects the call to an NGN terminal of the same number. Thus, the "one number two terminals" function of the GSM mobile terminal and UC service terminal in the NGN is implemented.

### 2. Routing by number segment

The routing by number segment is configured in all the MSCs in the whole GSM network, including the MSC, GMSC and trunk mobile switching center (TMSC).

When a GSM mobile phone number is called, the MSC triggered by the call judges whether the called number belongs to a specified number segment; if so, the call is routed to the GMSC that interconnects the home network of the called party and the NGN; the GMSC routes the call to the NGN to connect the call to an NGN terminal of the same number. Thus, the "one number two terminals" service of the mobile phone number is implemented.

During the research and practice of the preceding two call processing methods in the prior art, the inventor discovers the following problems: (1) to implement these two methods, the current GSM network needs to be changed greatly. For the first method, only one T_CSI can be registered in the HLR in the current GSM network. Thus, the HLR needs to be changed to allow one number to subscribe to multiple service attributes. For the second method, the current network is required to support trigger by number segment, and data needs to be produced in all the MSCs, GMSCs or TMSCs. The call is routed to the NGN according to the number segment. It is hard to implement the second method because a huge workload is involved in producing the routing data. (2) In the second method, because the number segments of "one number two terminals" service users must be allocated separately, such number segments cannot be provided to other intelligent service users. In addition, the intelligent service users cannot apply for the "one number two terminals" service directly.

### Summary of the Invention

Embodiments of the present invention provide a call processing method and intelligent network service control device for implementing "one-number multiple-terminals" service to reduce requirements for network changes.

A call processing method for implementing "one number multiple terminals" service in an embodiment of the present invention includes:
by a switching device in a first network, receiving a call carrying an initial called number, and triggering the call to a first SCP;
by the first SCP, judging that the call is triggered initially and that the initial called number has subscribed to "one number multiple terminals" service, and sending a control instruction to the switching device in the first network;
routing, by the switching device in the first network, the call to a switching device in a second network according to the control instruction sent by the first SCP;
triggering, by the switching device in the second network, the call to a second SCP; by the second SCP, judging that the initial called number has subscribed to "one number multiple terminals" service, and sending a control instruction for connecting the call to multiple called terminals to the switching device in the second network, where the multiple called terminals include a first called terminal in the first network and a second called terminal in the second network; and
connecting, by the switching device in the second network, the call to the first called terminal and the second called terminal according to the control instruction sent by the second SCP.

A call processing method of "one number multiple terminals" service in an embodiment of the present invention includes:
receiving, by a first SCP, a call triggered by a switching device in a first network, where the call carries an initial called number; and
by the first SCP, judging that the call is initially triggered and that the initial called number has subscribed to "one number multiple terminals" service, and sending a control instruction to the switching device in the first network, where the control instruction is intended to control the switching device in the first network to route the call to a second network.

An intelligent network service control device in an embodiment of the present invention includes:
a first service logic unit, adapted to: receive a call triggered by a switching device in a first network, judge whether the call is initially triggered and whether the initial called number of the call has subscribed to "one number multiple terminals" service, and if so, trigger the service processing; and
a first service processing unit, adapted to send a control instruction to the switching device in the first network according to the trigger operation of the first service logic unit, where the control instruction is intended to control the switching device in the first network to route the call to a second network.

An intelligent network service control device in an embodiment of the present invention includes:
a second service logic unit, adapted to: receive a call routed through a first network, judge whether the initial called number of the call has subscribed to "one number multiple terminals" service, and trigger the service processing if the initial called number of the call has subscribed to "one number multiple terminals" service;
a second service processing unit, adapted to send a control instruction for connecting the call to multiple called terminals to a switching device in a second network according to the trigger operation performed by the second service logic unit, where the multiple called terminals include a first called terminal in the first network and a second called terminal in the second network, and the control instruction is intended to control the switching device in the second network to connect the call to the first called terminal and the second called terminal.

In the preceding technical solution, the SCP in the first network exercises control to route a call that is triggered to "one number multiple terminals" service users in the local network to the second network; the SCP in the second network controls the call connection to multiple called terminals. Thus, the second network capable of connecting a call to multiple terminals is utilized to connect the call to different called terminals. The call control function that the SCP in the first network generally has is used to route the call out of the network, which does not conflict with the existing service features. In addition, the core component of the first network only needs to undergo a simple routing configuration according to the related control instruction, which does not affect other calls and requires only few network changes.

### Brief Description of the Drawings

FIG. 1 is a flowchart of a call processing method of "one number multiple terminals" service according to a first embodiment of the present invention;
FIG. 2 is a flowchart of a call processing method for implementing "one number multiple terminals" service according to a second embodiment of the present invention;
FIG. 3 is a signaling flowchart of the method according to the second embodiment of the present invention;
FIG. 4 is a flowchart of a call processing method for implementing "one number multiple terminals" service according to a third embodiment of the present invention;
FIG. 5 is a signaling flowchart of the method according to the third embodiment of the present invention;
FIG. 6 shows a logical structure of an intelligent network service control device according to a fourth embodiment of the present invention;
FIG. 7 shows a logical structure of an intelligent network service control device according to a fifth embodiment of the present invention;
FIG. 8 shows a logical structure of an intelligent network service control device according to a sixth embodiment of the present invention;
FIG. 9 shows a logical structure of an intelligent network service control device according to a seventh embodiment of the present invention; and
FIG. 10 shows a logical structure of an intelligent network service control device according to an eighth embodiment of the present invention.

### Detailed Description of the Embodiments

Embodiments of the present invention provide a call processing method of "one number multiple terminals" service and a call processing method for implementing "one number multiple terminals" service. An SCP in a first network exercises control to route a call that is triggered to "one number multiple terminals" service users in the local network to a second network; an SCP in the second network controls the call connection to multiple called terminals. Embodiments of the present invention also provide an intelligent network service control device. The following describes the embodiments of the present invention in detail.

### First Embodiment

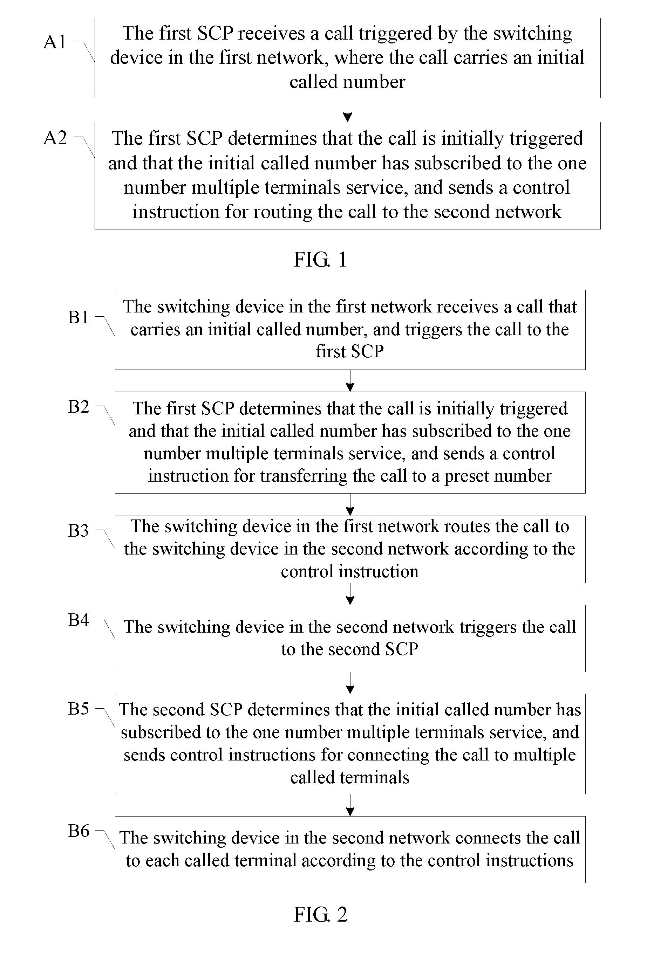

As shown in FIG. 1, a call processing method of "one number multiple terminals" service includes:
A1. The first SCP receives a call triggered by the switching device in the first network, where the call carries an initial called number.
   The call may be originated by a user in the first network or in other networks. The call is received by a user in the first network; that is, the initial called number carried in the call is represented by a number in the first network. For example, if the first network is a GSM network, the initial called number is a GSM mobile phone number.
A2. The first SCP determines that the call is initially triggered and that the initial called number has subscribed to the "one number multiple terminals" service, and sends a control instruction to the switching device in the first network, where the control instruction is intended to control the switching device in the first network to route the call to the second network.
   In this embodiment, the "one number multiple terminals" service logic in the first network is executed by the first SCP, and the call control is exercised to route the call made to the "one number multiple terminals" user out of the local network. The specific control method may be selected based on various modes of routing the call to the second network that are controllable by the first SCP. For example, a call transfer mode may be used to transfer the call to a specific number pointing to the second network; or a specific access code may be inserted before the initial called number, so that the switching device in the first network can determine that the call needs to be routed out of the local network.

The first SCP needs to judge whether the call is initially triggered because one of called terminals that are finally connected is the first called terminal in the first network. In subsequent processes, when the call needs to be connected to the first called terminal, the call is triggered to the first SCP once again. In this case, the first SCP determines that the call is not initially triggered, and then performs the call connection according to the general control process.

The switching device in the first network may undergo a simple routing configuration to route the call to the second network according to the control instruction sent by the first SCP. Supposing the first network is a GSM network and the second network is an NGN, simple routing data may be configured in the MSC, TMSC or GMSC in the first network. When the call meets the preset condition, for example, when the called number is a preset number or the called number has a specific access code, the call is routed to the home second network of the initial called number.

In this embodiment, the SCP in the first network routes the call triggered to the "one number multiple terminals" user in the local network to the second network through call transfer. The call control function that the SCP in the first network is generally used to route the call out of the network, which does not conflict with the existing service features. In addition, the core component of the first network needs to undergo a simple routing configuration only according to the related control instruction, which does not affect other calls and requires only few network changes.

The following provides multiple call processing methods for implementing "one number multiple terminals" service based on the call processing method of "one number multiple terminals" service in the first network in the first embodiment.

### Second Embodiment

A call processing method for implementing "one number multiple terminals" service is provided. In this embodiment, the first SCP exercises control to route a call to the second network through call transfer. As shown in FIG. 2, the process includes the following steps:
B1. The switching device in the first network receives a call that carries an initial called number, and triggers the call to the first SCP.
   This step may be performed with reference to a process of triggering an ordinary call in the first network to the first SCP. The process may include the following steps supposing the first network is a GSM network:
   Step 1: The first switching device that receives the call in the first network initiates a static route query operation to the HLR.
      If the calling party is a user in the first network, the first switching device is generally an MSC in the visited network of the calling party. If the calling party is a user in other networks, the first switching device is generally a GMSC at the border between the first network and the home network of the calling party. After receiving the call, the MSC or GMSC may send static route information (SRI) to the HLR to query the route.
   Step 2: The first switching device obtains a T-CSI from a SRI acknowledgement (SRI-ACK) returned by the HLR.
      The MSC or GMSC may obtain the T-CSI carried in the SRI-ACK returned by the HLR.
   Step 3: The first switching device triggers the call to the first SCP according to the T-CSI.
      If the MSC or GMSC determines that the initial called number has subscribed to an intelligent service according to the T_CSI, the call may be reported to an intelligent SCP that acts as the first SCP through an initial detection point (IDP) message.
B2. The first SCP determines that the call is initially triggered and that the initial called number has subscribed to the "one number multiple terminals" service, and sends a control instruction to the switching device in the first network.
   In this embodiment, a call transfer mode is used. Specifically, the first SCP sends a call diversion instruction to the switching device in the first network; the called number carried in the call diversion instruction is set to a preset number; and the old called number carried in the call diversion instruction is set to the initial called number. In this case, the call diversion instruction notifies the switching device in the first network of the necessity to connect the call to the preset number. The preset number may be a special service number similar to 13800138000, and is allocated for the "one number multiple terminals" service.
B3. The switching device in the first network routes the call to the switching device in the second network according to the control instruction sent by the first SCP.
   A simple routing configuration may be performed on the switching device in the first network to route a call of which the called number is a preset number to the second network. Supposing the first network is a GSM network and the second network is an NGN, simple routing data may be configured in the MSC, TMSC or GMSC in the first network. When the called number of the call is the preset number, the call is routed to the home second network of the old called number. Specifically, the process may include the following steps:
   Step 1: The first switching device that receives the call in the first network routes the call to the home gateway switching device of the called party.
      The MSC that acts as the first switching device and the TMSC that may be passed through routes the call to the home GMSC of the initial called number when determining that the call meets the preset condition (in this embodiment, the preset condition is that the called number is the preset number).
   Step 2: The home gateway switching device of the called party routes the call to a UMG in the second network.
      When receiving a call meeting the preset condition, the home GMSC of the called party coordinates in producing routing data, and routes the call to the second network. Generally, the first network and the second network may exchange signaling and data through the UMG. Thus, the home GMSC of the called party may route the call to the UMG first.
   Step 3: The UMG routes the call to the switching device in the second network.
      If the second network is an NGN, the switching device in the second network is generally a softswitch.
B4. The switching device in the second network triggers the call to the second SCP.
   The switching device in the second network needs to undergo related data configurations to identify the call of which the called number is the preset number, and triggers the call to the second SCP. Certainly, when the call is triggered to the second SCP, the switching device in the second network may map or convert the protocol for the call according to the difference between networks in signaling and data formats. If the second network is an NGN, the second SCP is generally an NGN application server (AS). The softswitch that acts as the switching device in the second network may convert the representation form of the call (for example, an ISUP message) into a SIP message, and then trigger it to the AS.
B5. The second SCP determines that the initial called number has subscribed to the "one number multiple terminals" service, and sends a control instruction for connecting the call to multiple called terminals to the switching device in the second network, where the multiple called terminals include a first called terminal in the first network and a second called terminal in the second network.
   The second SCP, for example, the AS that processes the UC service in the NGN, is capable of controlling the call connection to multiple terminals of the same number. In this embodiment, the call is routed to the second network through call transfer. Thus, the second SCP needs to undergo related data configurations to identify the call of which the called number is the preset number, and obtain the initial called number from the call information to judge whether the initial called number has subscribed to the "one number multiple terminals" service.
   Based on different service logic, the second SCP may connect a call to multiple called terminals through various control instruction sending modes, for example:
   (1) Ringing multiple terminals simultaneously
      The second SCP sends control instructions for connecting the call to multiple called terminals at the same time. That is, the instructions for connecting the call to each called terminal are sent respectively. If the called party answers a terminal, the second SCP may cancel the call triggered to other terminals and stop ringing the terminals according to the returned signaling.
   (2) Ringing multiple terminals in sequence
      The second SCP sends control instructions for connecting the call to multiple called terminals in turn according to a preset sequence. After sending a control instruction for connecting the call to a called terminal, the second SCP continues to send a control instruction for connecting the call to the next called terminal according to the returned signaling. That is, each called terminal may ring in sequence. For example, if two terminals of the same number of the called party are an NGN soft terminal and a GSM mobile terminal, the second SCP may control the call connection to the NGN soft terminal first, and then control the call connection to the GSM mobile terminal after determining that the soft terminal is not answered according to the returned signaling.

   Certainly, the called terminals of the same number are not limited to terminals in the first network and the second network, and may be terminals in a third network. Because terminals in the first network and the third network are terminals out of the local network, the second SCP only needs to send a call connection control instruction to such terminals respectively. Then, the switching device in the second network routes the call out of the local network according to the single call processing method.
B6. The switching device in the second network connects the call to the first called terminal and the second called terminal according to the control instructions sent by the second SCP.
   In this step, the switching device in the second network may perform the call connection according to the general call connection process. The call connection to the second called terminal is performed in the second network, and the call to the first called terminal is routed back to the first network and re-triggered to the first SCP. In this case, the first SCP determines that the call is not initially triggered. That is, the first SCP performs the call connection according to the general call connection process.

In this embodiment, the SCP in the first network routes the call that is triggered to the "one number multiple terminals" service user in the local network to the second network through call transfer; the SCP in the second network controls the call connection to multiple called terminals; and the second network that can connect the call to multiple terminals connects the call to different called terminals. The call transfer function that the SCP in the first network generally has is used to route the call out of the network, which does not conflict with the existing service features. In addition, the core component of the first network needs to undergo a simple routing configuration only according to the related control instruction, which does not affect other calls and requires only few network changes.

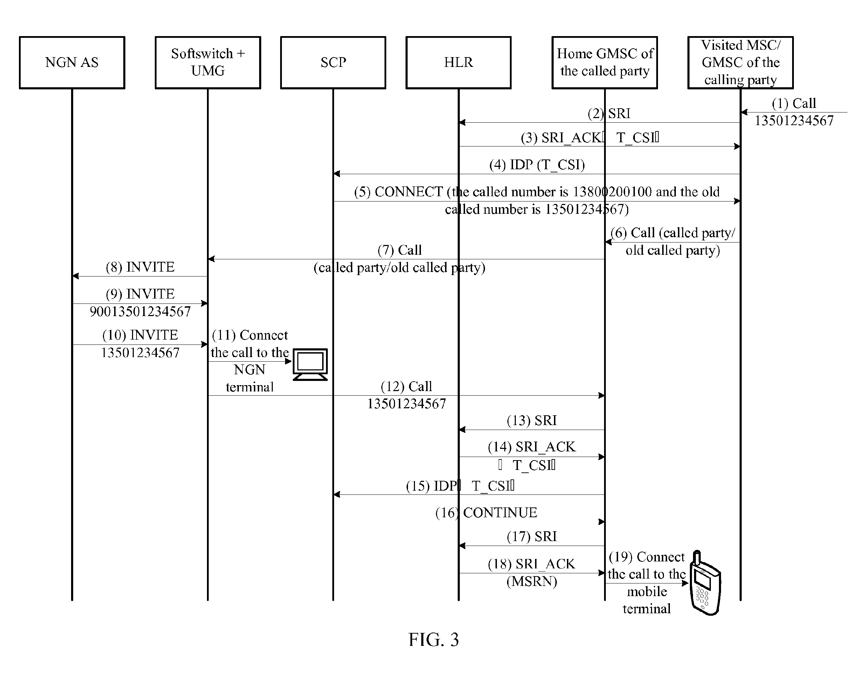

For better understanding of this embodiment, the following describes an applicable signaling process, supposing: the first network is a GSM network; the second network is an NGN; and the first called terminal is a GSM mobile terminal and the second called terminal is an NGN soft terminal. As shown in FIG. 3, the process includes the following steps:
(1) The calling party dials an initial called number "13501234567". The call is triggered at the visited MSC or GMSC of the calling party.
(2) The visited MSC or GMSC of the calling party initiates an SRI operation to the HLR.
(3) The visited MSC or GMSC of the calling party obtains a T-CSI from the returned SRI-ACK.
(4) The visited MSC or GMSC of the calling party triggers a called intelligent service according to the T-CSI, and reports the call to the SCP through an IDP message.
(5) The SCP determines that the call is initially triggered, and searches for attributes of the initial called number 13501234567. If the SCP determines that the called party has subscribed to the "one number two terminals" service according to the attributes, the SCP sends a CONNECT message, and processes the message as follows: The called number is set to a special roaming number of the GSM network. Supposing the special roaming number is 13800200100, the old called number is set to an initial called number 13501234567.
(6) If determining that the called number is a special roaming number, the visited MSC or GMSC of the calling party routes the call to the home GMSC of the called party (through or not through the TMSC).
(7) The home GMSC of the called party coordinates in producing routing data, and points the call of which the called number is the special roaming number 13800200100 to the softswitch of the NGN (The interworking between the GMSC and the softswitch is performed through the UMG).
(8) The softswitch converts the ISUP message into a SIP message (by using an INVITE message). The protocol mapping method includes: mapping the old called number of the ISUP message to a TO field of the SIP message and the called number to a REQUEST-URI field of the SIP message; coordinating in producing routing data, and triggering the call of which the called number is the roaming number 13800200100 to the NGN AS.
(9) The NGN AS needs to determine the INVITE SIP message. If the REQUEST-URI field is the special roaming number 13800200100, the NGN AS obtains the initial called number 13501234567 from the TO field. If the NGN AS determines that the initial called number has subscribed to the "one number two terminals" service, the NGN AS sends two INVITE calls at the same time. One is triggered to an NGN terminal of the same number, and is represented by an internal special access code 900 inserted before the initial called number.
(10) The other INVITE call sent by the NGN AS is triggered to the mobile terminal of the same number, and the called number of the call is the initial called number.
(11) The softswitch receives the call triggered to the NGN terminal of the same number from the AS, and connects the call to the NGN terminal after removing the special access code 900 carried in the called number.
(12) The softswitch receives the call triggered to the mobile terminal of the same number from the AS, and routes the call back to the home GMSC of the called party in the GSM network according to the fact that the called number is a mobile phone number.
(13) The home GMSC of the called party regards the call as a new call, and initiates an SRI operation to the HLR.
(14) The home GMSC of the called party obtains a T-CSI from the returned SRI-ACK message.
(15) The home GMSC of the called party triggers a called intelligent service according to the T-CSI, and reports the call to the SCP once again through an IDP message.
(16) If the SCP determines that the call is retriggered (or the call is triggered from the NGN), the SCP regards the call as an ordinary call, and sends a CONTINUE message to connect the call to the called mobile terminal of the same number.
(17) The home GMSC of the called party initiates an SRI operation to the HLR.
(18) The home GMSC of the called party obtains a roaming number (MSRN) of the called mobile terminal from the returned SRI_ACK message.
(19) The home GMSC of the called party connects the call to the mobile terminal of the same number according to the value of the MSRN.

The preceding process is a process of ringing the mobile terminal and NGN terminal of the same number simultaneously. After one of such terminals answers the call, the NGN AS cancels the call triggered to the other terminal. The NGN AS may also trigger a call in sequence to ring the terminals in sequence. This process is similar to the preceding process, and will not be further described.

### Third Embodiment

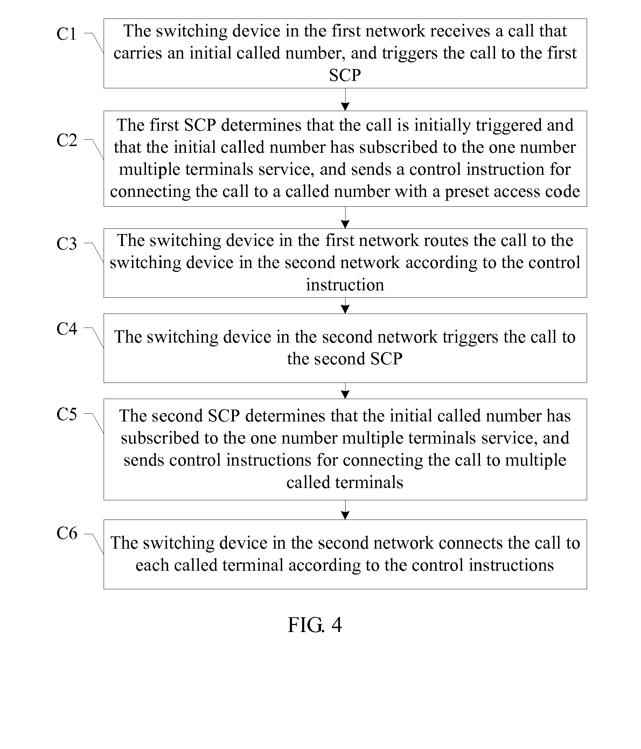

This embodiment provides a call processing method for implementing "one number multiple terminals" service. The difference between this embodiment and the second embodiment is as follows: the first SCP exercises control to route a call to the second network by inserting a preset access code before the called number. As shown in FIG. 4, the process includes the following steps:
C1. The switching device in the first network receives a call that carries an initial called number, and triggers the call to the first SCP.
   This step may be performed with reference to step B1 in the second embodiment.
C2. The first SCP determines that the call is initially triggered and that the initial called number has subscribed to the "one number multiple terminals" service, and sends a control instruction to the switching device in the first network. In this embodiment, the control instruction is a call connection instruction, in which the called number includes a preset access code inserted before the initial called number. The call connection instruction notifies the switching device in the first network to connect the call to the called number with the preset access code. The preset access code may be a special short number, for example, 12345, or a combination of the home area code of the initial called number and a short number, for example, 02012345. The preset access code may be determined according to the actual requirement.
C3. The switching device in the first network routes the call to the switching device in the second network according to the control instruction sent by the first SCP.
   Simple routing configurations may be performed on the switching device in the first network to route the call of which the called number includes the preset access code to the second network. Supposing the first network is a GSM network and the second network is an NGN, the simple routing data may be configured on the MSC, TMSC or GMSC in the first network. When determining that the called number includes a preset access code, the MSC, TMSC or GMSC routes the call to the home second network of the called number. The specific routing process is similar to step B3 in the second embodiment, and will not be further described.
C4. The switching device in the second network triggers the call to the second SCP.
   This step may be performed with reference to step B4 in the second embodiment.
C5. The second SCP determines that the initial called number has subscribed to the "one number multiple terminals" service, and sends control instructions for connecting the call to multiple called terminals to the switching device in the second network, where the multiple called terminals include a first called terminal in the first network and a second called terminal in the second network.
   In this embodiment, the call routed to the second network is implemented by inserting a preset access code before the called number. Thus, the second SCP needs to undergo related data configurations to identify the call of the called number that has a preset access code as the prefix. The second SCP removes the access code to obtain the initial called number to judge whether the called number has subscribed to the "one number multiple terminals" service.
   The second SCP may send control indications with reference to step B5 in the second embodiment.
C6. The switching device in the second network connects the call to the first called terminal and the second called terminal according to the control instructions sent by the second SCP.
   This step may be performed with reference to step B6 in the second embodiment.

In this embodiment, the SCP in the first network routes the call triggered to the "one number multiple terminals" service user in the local network to the second network by inserting a preset access code before the called number; the SCP in the second network then exercises control to connect the call to multiple called terminals. Thus, the second network capable of connecting the call to multiple terminals is used to connect the call to different called terminals. The call connection function that the SCP in the first network generally has is used to route the call out of the network, which does not conflict with the existing service features. In addition, the core component of the first network needs to undergo a simple routing configuration only according to the related control instruction, which does not affect other calls and requires only few network changes.

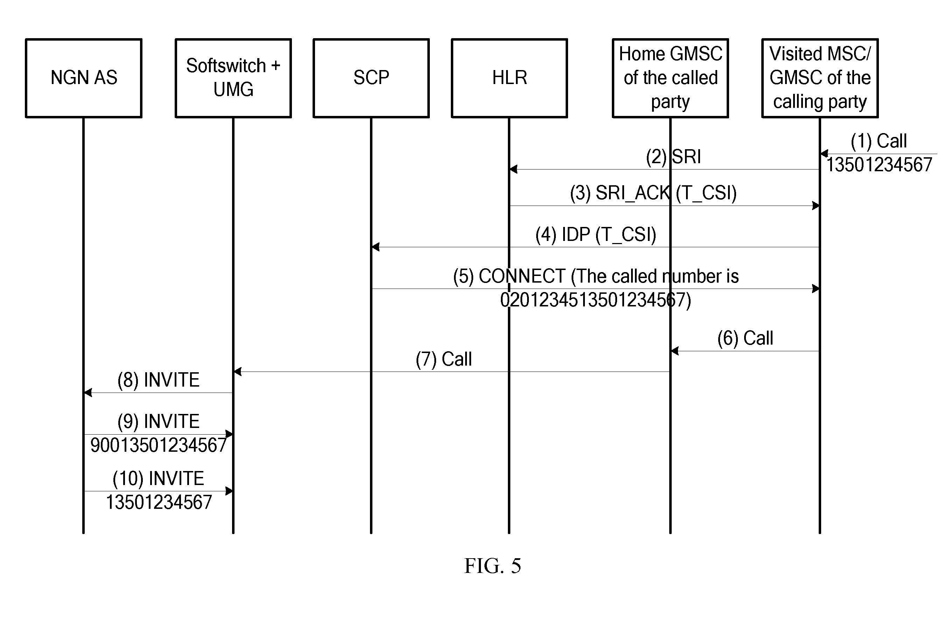

For better understanding of this embodiment, the following describes an applicable signaling process, supposing: the first network is a GSM network; the second network is an NGN; and the first called terminal is a GSM mobile terminal and the second called terminal is an NGN soft terminal. As shown in FIG. 5, the process includes the following steps:
(1) The calling party dials an initial called number 13501234567. The call is triggered at the visited MSC or GMSC of the calling party.
(2) The visited MSC or GMSC of the calling party initiates an SRI operation to the HLR.
(3) The visited MSC or GMSC of the calling party obtains a T-CSI from the returned SRI-ACK message.
(4) The visited MSC or GMSC of the calling party triggers a called intelligent service according to the T-CSI, and reports the call to the SCP through an IDP message.
(5) The SCP determines that the call is initially triggered, and searches for attributes of the called number 13501234567. If determining that the called number has subscribed to the attribute of the "one number two terminals" service, the SCP sends a CONNECT message and processes the message as follows: inserting an access code 02012345 before the called number.
(6) If determining that the called number includes the preset access code, the visited MSC or GMSC of the calling party routes the call to the home GMSC of the called party (through or not through the TMSC).
(7) The home GMSC of the called party coordinates in producing routing data, and points the call of which the called number includes the preset access code to the softswitch of the NGN (The interworking between the GMSC and the softswitch is performed through the UMG).
(8) The softswitch converts the ISUP message into a SIP message (by using an INVITE message). The protocol mapping method includes: mapping the called number of the ISUP message to a TO field (and/or a REQUEST-URI field) of the SIP message; coordinating in producing routing data, and triggering the call of which the called number is 0201234513501234567 to the NGN AS.
(9) The NGN AS needs to determine the INVITE SIP message. If the called number in the TO field includes the preset access code, the NGN AS removes the access code to obtain the initial called number 13501234567; if determining that the initial called number 13501234567 has subscribed to the "one number two terminals" service, the NGN AS sends two INVITE calls at the same time. One call is triggered to an NGN terminal of the same number, and is represented by an internal special access code 900 inserted before the initial called number (the call connection process is the same as that in the second embodiment, and will not be further described).
(10) The other INVITE call sent by the NGN AS is triggered to a mobile terminal of the same number, and the called number is the initial called number (the call connection process is the same as that in the second embodiment, and will not be further described).

The following describes an intelligent network service control device in detail in an embodiment of the present invention.

### Fourth Embodiment

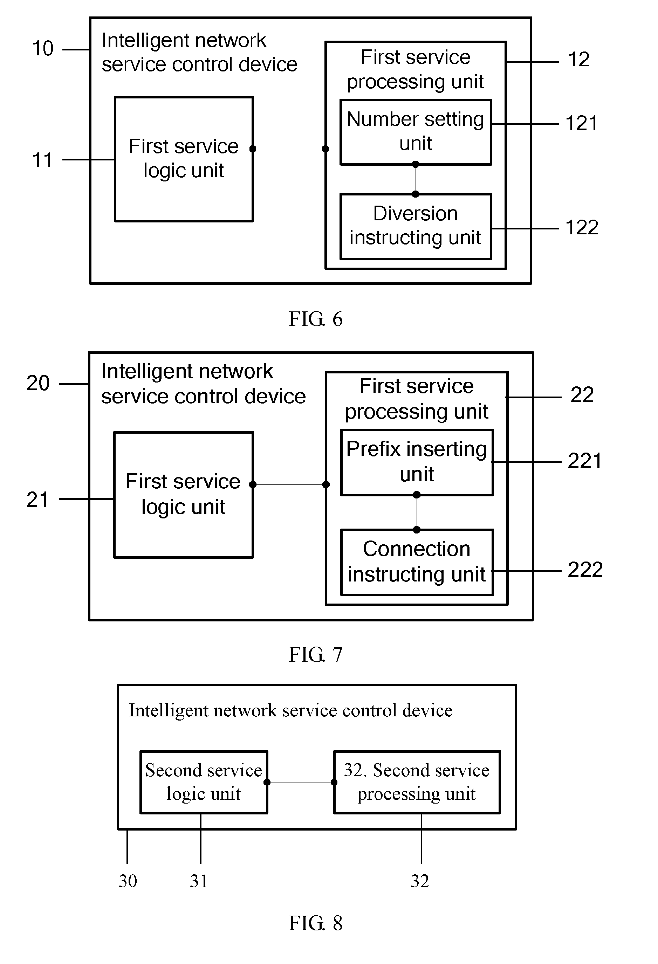

As shown in FIG. 6, an intelligent network service control device 10 includes a first service logic unit 11 and a first service processing unit 12.

The first service logic unit 11 is adapted to: receive a call triggered by a switching device in a first network, judge whether the call is initially triggered and whether the initial called number of the call has subscribed to the "one number multiple terminals" service, and if so, trigger a service processing operation.

The first service processing unit 12 is adapted to send a control instruction to the switching device in the first network according to the trigger operation performed by the first service logic unit 11, where the control instruction is intended to control the switching device in the first network to route the call to a switching device in a second network.

The first service processing unit 12 may include:
a number setting unit 121, adapted to generate a call diversion instruction, of which the called number is set to a preset number and the old called number is set to the initial called number; and
a diversion instructing unit 122, adapted to send a call diversion instruction generated by the number setting unit 121 to the switching device in the first network.

The intelligent network service control device provided in this embodiment may act as the first SCP in the second embodiment.

### Fifth Embodiment

As shown in FIG. 7, an intelligent network service control device 20 includes a first service logic unit 21 and a first service processing unit 22.

The first service logic unit 21 is adapted to: receive a call triggered by a switching device in a first network, judge whether the call is initially triggered and whether the initial called number of the call has subscribed to the "one number multiple terminals" service, and if so, trigger a service processing operation.

The first service processing unit 22 includes:
a prefix inserting unit 221, adapted to generate a call connection instruction according to the trigger operation performed by the first service logic unit 21, the called number of which includes a preset access code inserted before the initial called number, where the instruction is intended to control the switching device in the first network to route the call to a switching device in a second network; and
a connection instructing unit 222, adapted to send the call connection instruction generated by the prefix inserting unit 221 to the switching device in the first network.

The intelligent network service control device provided in this embodiment may act as the first SCP in the third embodiment.

### Sixth Embodiment

As shown in FIG. 8, an intelligent network service control device 30 includes:
a second service logic unit 31, adapted to: receive a call routed through a first network, judge whether the initial called number of the call has subscribed to the "one number multiple terminals" service, and if so, trigger a service processing operation; and
a second service processing unit 32, adapted to send control instructions for connecting the call to multiple called terminals to the switching device in the second network according to the trigger operation performed by the second service logic unit, where: the multiple called terminals include a first called terminal in the first network and a second called terminal in the second network, and the control instructions are intended to control the switching device in the second network to connect the call to the first called terminal and the second called terminal.

### Seventh Embodiment

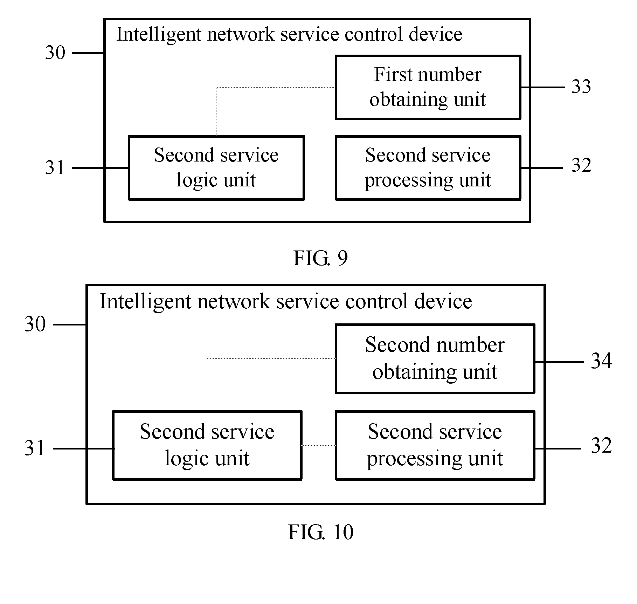

This embodiment provides an intelligent network service control device based on the intelligent network service control device 30 shown in FIG. 8, which corresponds to the fourth embodiment. As shown in FIG. 9, the intelligent network service control device 30 may further include:
a first number obtaining unit 33, adapted to: judge whether the current called number of a call is a preset number, and if so, obtain the initial called number of the call so that the second service logic unit 31 judges whether the initial called number has subscribed to the "one number multiple terminals" service.

### Eighth Embodiment

This embodiment provides an intelligent network service control device based on the intelligent network service control device 30 shown in FIG. 8, which corresponds to the fifth embodiment. As shown in FIG. 10, the intelligent network service control device 30 may further include:
a second number obtaining unit 34, adapted to: judge whether the current called number of a call includes a preset access code, and if so, obtain the initial called number of the call to judge whether the initial called number has subscribed to the "one number multiple terminals" service.

It is understandable to those skilled in the art that all or part of the steps of the foregoing embodiments may be implemented by hardware instructed by a program. The program may be stored in a computer-readable storage medium. When being executed, the program performs the steps of the foregoing method embodiments. The storage medium may be any medium capable of storing program codes, for example, a Read-Only Memory (ROM), a Random Access Memory (RAM), a magnetic disk, and a compact disk. In embodiments of the present invention, the SCP in the first network is used to exercise control to route a call that is triggered to the "one number multiple terminals" user in the local network to the second network; the SCP in the second network is used to control the call connection to multiple called terminals. Thus, the second network capable of connecting the call to multiple terminals is used to connect the call to different called terminals. The SCP in the first network may route a call out of the network through call transfer or by inserting a preset access code before the called number. The call control function that the SCP in the first network generally has is used to route the call out of the network, which does not conflict with the existing service features. In addition, the core component of the first network needs to undergo a simple routing configuration only according to the related control instruction, which does not affect other calls and requires only few network changes.

Detailed above are a call processing method of "one number multiple terminals" service, a call processing method for implementing "one number multiple terminals" service, and an intelligent network service control device under the present invention. Although the invention is described through several exemplary embodiments, the invention is not limited to such embodiments. It is apparent that those skilled in the art can make various modifications and variations to the invention without departing from the spirit and scope of the invention. The invention shall cover the modifications and variations provided that they fall in the scope of protection defined by the following claims or their equivalents.

## Claims

1. A call processing method for implementing "one number multiple terminals" service, comprising:
by a switching device in a first network, receiving a call carrying an initial called number, and triggering the call to a first service control point (SCP);
by the first SCP, determining that the call is triggered initially and that the initial called number has subscribed to "one number multiple terminals" service, and sending a control instruction to the switching device in the first network;
routing, by the switching device in the first network, the call to a switching device in a second network according to the control instruction sent by the first SCP;
triggering, by the switching device in the second network, the call to a second SCP;
by the second SCP, determining that the initial called number has subscribed to "one number multiple terminals" service, and sending a control instruction for connecting the call to multiple called terminals to the switching device in the second network, wherein the multiple called terminals include a first called terminal in the first network and a second called terminal in the second network; and
connecting, by the switching device in the second network, the call to the first called terminal and the second called terminal according to the control instruction sent by the second SCP.

2. The call processing method for implementing "one number multiple terminals" service according to claim 1, wherein the process of routing, by the switching device in the first network, the call to the switching device in the second network according to the control instruction sent by the first SCP comprises:
routing, by the first switching device that receive the call in the first network, the call to a home gateway switching device of the called party;
routing, by the home gateway switching device of the called party, the call to a universal media gateway (UMG) in the second network; and
routing, by the UMG, the call to the switching device in the second network.

3. The call processing method for implementing "one number multiple terminals" service according to claim 1, wherein the process of sending, by the first SCP, a control instruction to the switching device in the first network comprises:
sending, by the first SCP, a call diversion instruction to the switching device in the first network, wherein the called number carried in the call diversion instruction is set to a preset number, and the old called number carried in the call diversion instruction is set to the initial called number;
the process of routing, by the switching device in the first network, the call to the switching device in a second network according to the control instruction sent by the first SCP comprises: routing, by the switching device in the first network, the call to the switching device in the second network, when the switching device in the first network determines that the called number of the call is the preset number according to the call diversion instruction; and
before the process of determining, by the second SCP, that the initial called number has subscribed to "one number multiple terminals" service comprises: obtaining, by the second SCP, the initial called number of the call, when the second SCP determines that the called number of the call is the preset number.

4. The call processing method for implementing "one number multiple terminals" service according to claim 1, wherein
the process of sending, by the first SCP, a control instruction to the switching device in the first network comprises: sending, by the first SCP, a call connection instruction to the switching device in the first network, wherein the called number of the call connection instruction includes a preset access code inserted before the initial called number;
the process of routing, by the switching device in the first network, the call to the switching device in a second network according to the control instruction sent by the first SCP comprises: routing, by the switching device in the first network, the call to the switching device in the second network, when the switching device in the first network determine that the called number of the call includes the preset access code according to the call connection instruction; and
before the process of determining, by the second SCP, that the initial called number has subscribed to "one number multiple terminals" service comprises: obtaining, by the second SCP, the initial called number of the call, when the second SCP determines that the called number of the call includes the preset access code.

5. The call processing method for implementing "one number multiple terminals" service according to any one of claims 1 to 4, wherein the process of sending, by the second SCP, a control instruction for connecting the call to multiple called terminals to the switching device in the second network comprises: sending, by the second SCP, several control instructions for connecting the call to the multiple called terminals at the same time.

6. The call processing method for implementing "one number multiple terminals" service according to any one of claims 1 to 4, wherein the process of sending, by the second SCP, a control instruction for connecting the call to multiple called terminals to the switching device in the second network comprises: sending, by the second SCP, several control instructions for connecting the call to the multiple called terminals in turn according to a preset sequence.

7. The call processing method for implementing "one number multiple terminals" service according to any one of claims 1 to 4, wherein the process receiving, by the switching devide in a first network, the call carrying the initial called number, and triggering the call to the call to the first SCP comprises:
initiating, by the first switching device that receives the call in the first network, a static route query operation to a home location register (HLR); and
obtaining, by the first switching device a (T-CSI).

8. A call processing method of "one number multiple terminals" service, comprising:
receiving, by a first SCP, a call triggered by a switching device in a first network, wherein the call carries an initial called number; and
by the first SCP, determining that the call is initially triggered and that the initial called number has subscribed to "one number multiple terminals" service, and sending a control instruction to the switching device in the first network, wherein the control instruction is intended to control the switching device in the first network to route the call to a second network.

9. The call processing method of "one number multiple terminals" service according to claim 8, wherein the process of sending, by the first SCP, a control instruction to the switching device in the first network comprises: sending, by the first SCP, a call diversion instruction to the switching device in the first network, wherein the called number carried in the call diversion instruction is set to a preset number, and the old called number carried in the call diversion instruction is set to the initial called number.

10. The call processing method of "one number multiple terminals" service according to claim 8, wherein the process of sending, by the first SCP, a control instruction to the switching device in the first network comprises: sending, by the first SCP, a call connection instruction to the switching device in the first network, wherein the called number of the call connection instruction includes a preset access code inserted before the initial called number.

11. An intelligent network service control device, comprising:
a first service logic unit, adapted to: receive a call triggered by a switching device in a first network, determine whether the call is initially triggered and whether the initial called number of the call has subscribed to "one number multiple terminals" service, and if the initial called number of the call has subscribed to "one number multiple terminals" service, trigger the service processing; and
a first service processing unit, adapted to send a control instruction to the switching device in the first network according to the trigger operation of the first service logic unit, wherein the control instruction is intended to control the switching device in the first network to route the call to a second network.

12. The intelligent network service control device according to claim 11, wherein the first service processing unit comprising:
a number setting unit, adapted to generate a call diversion instruction, wherein the called number of the call diversion instruction is set to a preset number and the old called number is set to the initial called number; and
a diversion instructing unit, adapted to send a call diversion instruction to the switching device in the first network.

13. The intelligent network service control device according to claim 11, wherein the first service processing unit comprises:
a prefix inserting unit, adapted to generate a call connection instruction, wherein the called number of the call connection instruction includes a preset access code inserted before the initial called number.

14. An intelligent network service control device, comprising:
a second service logic unit, adapted to: receive a call routed through a first network, judge whether the initial called number of the call has subscribed to "one number multiple terminals" service, and trigger the service processing if the initial called number of the call has subscribed to "one number multiple terminals" service; and
a second service processing unit, adapted to send a control instruction for connecting the call to multiple called terminals to a switching device in a second network according to the trigger operation performed by the second service logic unit, wherein the multiple called terminals include a first called terminal in the first network and a second called terminal in the second network, and the control instruction is intended to control the switching device in the second network to connect the call to the first called terminal and the second called terminal.

15. The intelligent network service control device according to claim 14, further comprising:
a first number obtaining unit, adapted to obtain the initial called number of the call, when the called number of the call is a preset number.

16. The intelligent network service control device according to claim 14, further comprising:
a second number obtaining unit, adapted to obtain the initial called number of the call, when the called number of the call includes a preset access code.
